# EUROPEAN PATENT APPLICATION

(11) **EP 1 837 879 A2**
(43) Date of publication of application: **26.09.2007**
(21) Application number: 06010081.5
(22) Date of filing: 16.05.2006
(51) Int. Cl.: G11B 27/36

(54) **Dubbing method using a label for identifying the dubbing status**

(30) Priority: 21.03.2006 US 277041
(71) Applicant: Media Tek Inc., Science-Based Industrial Park Hsin-Chu Hsien (TW)
(72) Inventor: Huang, Kan-Li, Taipei City (TW); Chen, Jaan-Huei, San-Chung City, Taipei Hsien (TW)
(74) Representative: Schaeberle, Steffen

(57) **Abstract**

The present embodiments provide a program transferring method and an apparatus thereof. The method includes the following steps: selecting a program in a first storage medium (520); transferring the program from the first storage medium (520) to a second storage medium (530); and generating a label for identifying the transferring status of the program.

## Description

The present invention relates to a method and related apparatus for transferring a program according to the pre-characterizing clauses of claims 1, 22, 25, and 42.

Some error conditions and user operations may interrupt a dubbing process (i.e., transferring). Conditions such as a power failure, a power off (e.g., toggling a power switch), a writing failure, or a temporary stop by a user. After the dubbing is interrupted, if the user wants to dub again, the dubbing process must be re-started from the beginning. This results in a waste of time or waste of DVD disc space or both.

This in mind, the present invention aims at providing a method and related apparatus for transferring a program that do not require re-starting the transferring process if the transferring process is interrupted.

This is achieved by a method and related apparatus for transferring a program according to claims 1, 22, 25, and 42. The dependent claims pertain to corresponding further developments and improvements.

As will be seen more clearly from the detailed description following below, the claimed method and related apparatus for transferring a program includes a controller that generates a label for identifying the transferring status of the program.

For completeness, various aspects of the invention are described in the following numbered clauses:
1. A program transferring method comprising:
   selecting a program in a first storage medium;
   transferring the program from the first storage medium to a second storage medium; and
   generating a label for identifying the transferring status of the program.
2. The method of clause 1, wherein the step of generating the label comprises:
   when the transferring process is interrupted, generating the label.
3. The method of clause 1, wherein the step of generating the label comprises:
   during the transferring process, repeatedly generating the label around a predetermined time interval.
4. The method of clause 1 further comprising:
   checking if the label corresponding to the program exists; and
   determining whether to resume the transferring process from an interrupted status.
5. The method of clause 1 further comprising:
   checking if the label corresponding to the program exists; and
   determining whether to resume the transferring process from an initial status.
6. The method of clause 1, wherein the step of transferring the program from the first storage medium to a second storage medium comprises:
   decoding the program to generate a decoded program;
   wherein the transferring process transfers the decoded program to the second storage medium.
7. The method of clause 1, wherein the step of transferring the program from the first storage medium to a second storage medium comprises:
   encoding the program to generate an encoded program;
   wherein the transferring process transfers the encoded program to the second storage medium.
8. The method of clause 1, wherein the step of transferring the program from the first storage medium to a second storage medium comprises:
   decoding the program and then encoding to generate an encoded program;
   wherein the coding scheme of the encoded program is different from the coding scheme of the program, and the transferring process transfers the encoded program to the second storage medium.
9. The method of clause 1, wherein the step of transferring the program from the first storage medium to a second storage medium comprises:
   decoding the program and then encoding to generate an encoded program;
   wherein the coding rate of the encoded program is different from the coding rate of the program, and the transferring process transfers the encoded program to the second storage medium.
10. The method of clause 1, wherein the label corresponds to a time information of the program.
11. The method of clause 1, wherein the label corresponds to a physical information of the program.
12. The method of clause 1, wherein the label corresponds to a logical position information of the program.
13. The method of clause 1 further comprising:
   saving the label into the first storage medium, the second storage medium, or an extra storage medium other than the first storage medium and the second storage medium.
14. The method of clause 13, wherein the extra storage medium is a non-volatile memory.
15. The method of clause 1, wherein the first storage medium is an optical disk.
16. The method of clause 1, wherein the first storage medium is a magnetic disk.
17. The method of clause 1, wherein the first storage medium is a magnetic-optical disk.
18. The method of clause 1, wherein the second storage medium is an optical disk or a magnetic disk.
19. The method of clause 1, wherein the second storage medium is a magnetic disk.
20. The method of clause 1, wherein the second storage medium is a magnetic-optical disk.
21. The method of clause 1, wherein if the first storage medium is a removable storage medium, the label further comprises information for identifying the first storage medium that contains the program; and if the second storage medium is a removable storage medium, the label further comprises information for identifying the second storage medium that contains the program.
22. A program transferring method comprising:
   retrieving a recovery information from a program, the recovery information being used for resuming a transferring process; and
   transferring the program from a first storage medium to a second storage medium according to the recovery information.
23. The method of clause 22 wherein the step of transferring the program from the first storage medium to the second storage medium comprises:
   determining whether to resume the transferring process from an interrupted status.
24. The method of clause 22 wherein the step of transferring the program from the first storage medium to a second storage medium comprises:
   determining whether to resume the transferring process from an initial status.
25. An apparatus for transferring a program, comprising:
   a first storage medium for storing a program;
   a second storage medium; and
   a controller, coupled to the first storage medium and the second storage medium, for transferring the program from the first storage medium to the second storage medium and generating a label for identifying the transferring status of the program.
26. The apparatus of clause 25, wherein when the transferring process is interrupted, the controller generates the label.
27. The apparatus of clause 25, wherein during the transferring process, the controller repeatedly generates the label around a predetermined time interval or a predetermined data length of recording.
28. The apparatus of clause 25, the controller further checking if the label corresponding to the program exists and determining whether to resume the transferring process from an interrupted status.
29. The apparatus of clause 25, the controller further checking if the label corresponding to the program exists and determining whether to resume the transferring process from an initial status.
30. The apparatus of clause 25, the controller further decoding the program to generate a decoded program, and transferring the decoded program to the second storage medium.
31. The apparatus of clause 25, the controller further encoding the program to generate an encoded program, and transferring the encoded program to the second storage medium.
32. The apparatus of clause 25, the controller further decoding and then encoding the program to generate an encoded program, and transferring the encoded program to the second storage medium, wherein the coding scheme of the encoded program is different from the coding scheme of the program.
33. The apparatus of clause 25, the controller further decoding and then encoding the program to generate an encoded program, and transferring the encoded program to the second storage medium, wherein the coding rate of the encoded program is different from the coding rate of the program.
34. The apparatus of clause 25, wherein the label corresponds to a time information of the program.
35. The apparatus of clause 25, wherein the label corresponds to a physical information of the program.
36. The apparatus of clause 25, wherein the label corresponds to a logical position information of the program.
37. The apparatus of clause 25, wherein the apparatus further comprises an extra storage medium that is coupled to the controller, and the controller further saves the label into the first storage medium, the second storage medium or the extra storage medium.
38. The apparatus of clause 37, wherein the extra storage medium is a non-volatile memory.
39. The apparatus of clause 35, wherein the first storage medium is an optical disk or a magnetic disk.
40. The apparatus of clause 25, wherein the second storage medium is an optical disk or a magnetic disk.
41. The apparatus of clause 25, wherein if the first storage medium is a removable storage medium, the label further comprises information for identifying the first storage medium that contains the program; and if the second storage medium is a removable storage medium, the label further comprises information for identifying the second storage medium that contains the program.
42. An apparatus for transferring a program, comprising:
   a first storage medium for storing a program;
   a second storage medium; and
   a controller, coupled to the first storage medium and the second storage medium, for retrieving a recovery information from the program and transferring the program from the first storage medium to the second storage medium according to the recovery information, wherein the recovery information is used for resuming a transferring process.
43. The apparatus of clause 42, wherein the controller further determines whether to resume the transferring process from an interrupted status.
44. The apparatus of clause 42, wherein the controller further determines whether to resume the transferring process from an initial status.

In the following, the invention is further illustrated by way of example, taking reference to the accompanying drawings. Thereof
Fig. 1 shows a fast copy dubbing system according to the related art,
Fig. 2 shows a transcode dubbing system according to the related art,
Fig. 3 shows a dubbing flow of the fast copy dubbing system of Fig. 1 or the transcode dubbing system of Fig. 2,
Fig. 4 shows a fast copy dubbing system of a first embodiment,
Fig. 5 shows a transcode dubbing system of a second embodiment,
Fig. 6 is a flow chart illustrating a first recovery method of a dubbing system,
Fig. 7 is a flow chart illustrating a second recovery method of a dubbing system,
Fig. 8 is a flow chart illustrating a third recovery method of a dubbing system, and
Fig. 9 is the continued flow chart of Fig. 8.

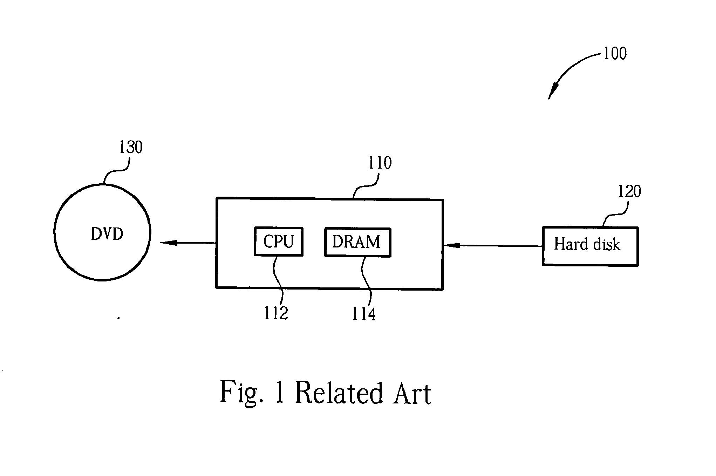

Please refer to Fig. 1. Fig. 1 shows a conventional fast copy dubbing system 100. The controller 110 includes a CPU 1 12 and a DRAM 1 14. The CPU 1 12 first de-multiplexes the program in the hard disk 120 (i.e. the source storage medium) and then stores the temporarily de-multiplexed program in the DRAM 114. The CPU 112 then re-multiplexes the temporary program in the DRAM to the DVD disk 130 (i.e. the destination storage medium). Some program-related information initially stored in the hard disk 120 is also temporarily moved to the DRAM and then written to the DVD disk 130. The fast copy dubbing system 100 is also suitable for dubbing from the DVD disk 130 to the hard disk 120, in which case it is only necessary to exchange the DVD disk 130 and the hard disk 120.

A transcoding dubbing process fully or partially decodes or encodes the original program in a source storage medium, and then writes the decoded or encoded program to a destination storage medium. Transcode dubbing also generates program information and stores the information in the destination storage medium. Since transcode dubbing fully or partially decodes or encodes the original program in a source storage medium, the characteristics of the duplicate in the destination storage medium may be different from the characteristics of the original program. Some of the characteristics are video quality, compression method, aspect ratio, bit-rate, video size, and TV system. For example, transcode dubbing transcodes a program from high quality to low quality, making the program fit the capacity of a DVD disk, or transcodes a program of 720x480 picture size to a program of 352x288 picture size, making the transcoded program able to be viewed on portable video players. However, because transcode dubbing fully or partially decodes or encodes the original program, transcode dubbing usually takes a long time to complete the dubbing process. For example, a 100-hour program may take 100 hours to finish the dubbing process.

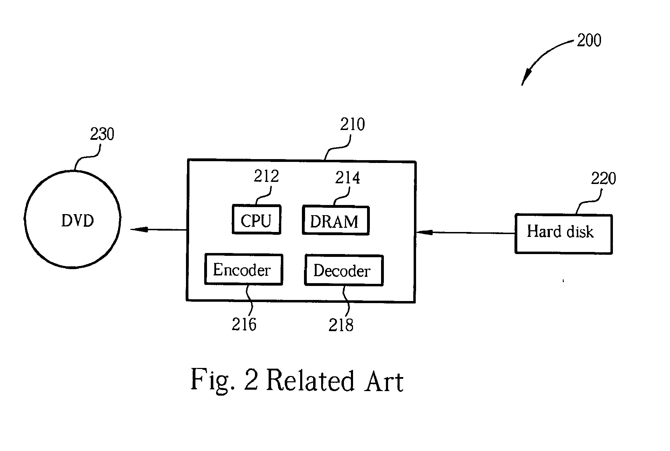

Please refer to Fig. 2. Fig. 2 shows a conventional transcode dubbing system 200. The controller 210 usually includes a CPU 212, a DRAM 214, an encoder 216, and a decoder 218. The CPU 212 first de-multiplexes the program in the hard disk 220 (i.e. the source storage medium) and then stores the temporary de-multiplexed program in the DRAM 214. The CPU 212 optionally controls the decoder 218 to fully or partially decode the temporary de-multiplexed program. The decoded program is stored in the DRAM. The CPU 212 further optionally controls the encoder 216 to re-encode the program in the DRAM 214 and then the CPU 212 re-multiplexes the re-encoded program to the DVD disk 230 (i.e. the destination storage medium). The CPU 212 also generates some program-related information and then stores the information in the DVD disk 230. The transcode dubbing system 200 is also suitable for dubbing from the DVD disk 230 to the hard disk 220, in which case it is only necessary to exchange the DVD disk 230 and the hard disk 220.

For a combo recorder comprising a hard disk and a DVD device, according to the types of source storage medium and destination storage medium, dubbing can be categorized into two types: from a hard disk to a DVD disk and from a DVD disk to a hard disk. In the case of dubbing from a hard disk to a DVD disk, because the size of the original program in the hard disk is usually larger than the capacity of one DVD disk, it is necessary to divide the original program into several pieces to fit the capacity of one DVD disk during fast copy dubbing, or to re-encode the original program to a lower quality during transcode dubbing such that the size of the re-encoded program fits the capacity of one DVD disk. On the other hand, in the case of dubbing from a DVD disk to a hard disk, most of the time there is no difficulty dubbing one original program from a DVD disk to a hard disk. Users can usually utilize the transcode dubbing to first copy the original program to a hard disk, edit the original program (e.g. decoding or encoding or both), and then dub the edited program back to another DVD disk.

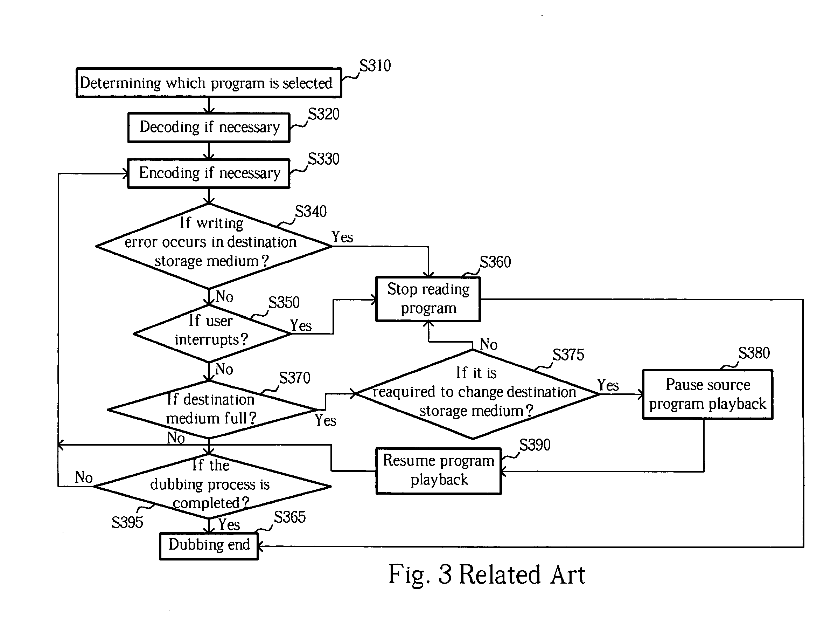

Please refer to Fig. 3. Fig. 3 shows a dubbing flow of the fast copy dubbing system 100 or the transcode dubbing system 200. The controller 210 or 310 first determines which program has been selected by a user (S310). Next, for the transcode dubbing system 200, the controller 210 decodes and encodes the program (S320 and S330) if necessary. For the fast copy dubbing system 100, the controller 110 skips the decoding and encoding steps. When the dubbing is in progress, the controller 210 checks if a writing error occurs in the destination storage medium (S340) and checks if the user wants to stop the dubbing process (S350). If a writing error occurs or the user stops the dubbing process, the controller 110 or 210 stops reading the program from the source storage medium (S360) and then ends the dubbing process (S365). During the dubbing process, the controller 110 or 210 also checks if the destination storage medium is full (S370). If the destination storage medium is full, the controller 110 or 210 checks if it is required to change the destination storage medium (S375). If it is not required to change the destination storage medium, the controller 110 or 210 stops reading the program from the source destination (S360) and then ends the dubbing process (S365). However, if it is required to change the destination storage medium, the controller 110 or 210 pauses the playback of the program, and waits for the user to change the destination storage medium (S380). After a new destination storage medium is connected, the controller 110 or 210 resumes reading the program from the source storage medium (S390). During the dubbing process, the controller 110 or 210 also checks if the program is completely dubbed (S395). If the program is completely dubbed, the controller 110 or 210 stops the dubbing process (S365). In some cases where the destination storage medium is not a removable storage medium such as a hard disk, the controller 110 or 210 stops the dubbing process when the destination storage medium is full. In such cases, the dubbing flow goes from step **S370** to step S360 directly.

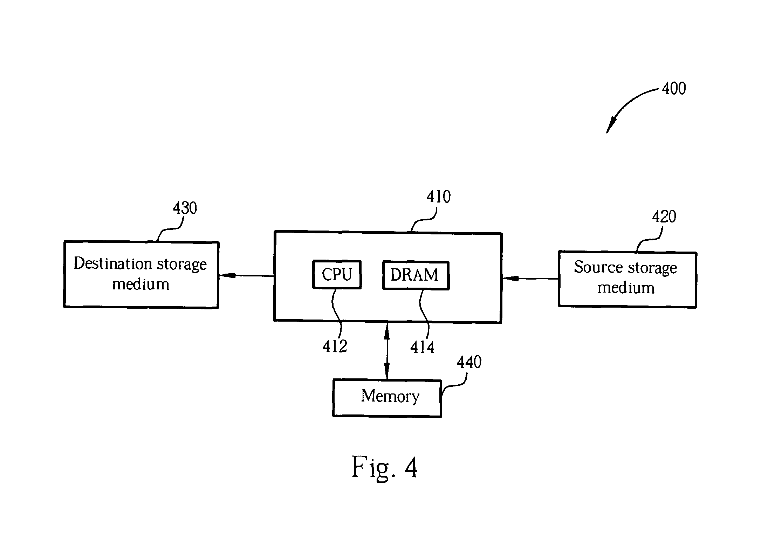

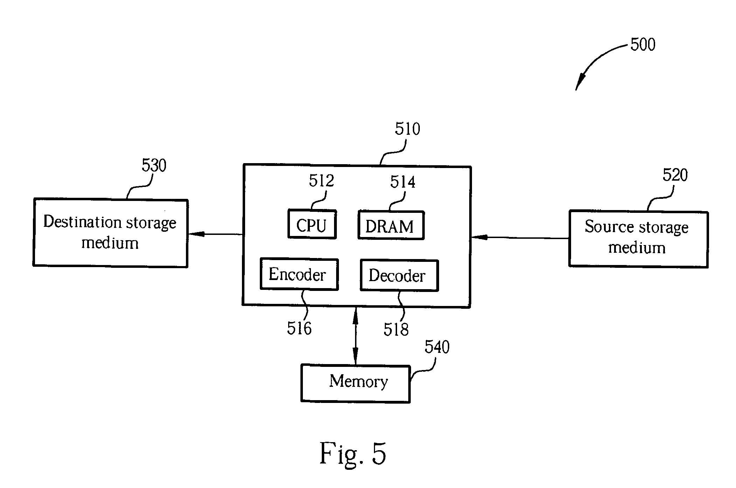

Please refer to Figs. 4 and 5. Fig. 4 is a fast copy dubbing system 400 of a first embodiment, and Fig. 5 is a transcode dubbing system 500 of a second embodiment. The fast copy dubbing system 400 includes a controller 410, a source storage medium 420, a destination storage medium 430, and a memory 440. The controller 410 includes a CPU 412, and a DRAM 414. The CPU 412 first de-multiplexes the program in the source storage medium 420 and then stores the temporary de-multiplexed program in the DRAM 414. The CPU 412 re-multiplexes the temporary program in the DRAM 414 to the destination storage medium 430. Some program-related information initially stored in the source storage medium 420 is also temporarily moved to the DRAM 414 and then written to the destination storage medium 430. The transcode dubbing system 500 includes a controller 510, a source storage medium 520, a destination storage medium 530, and a memory 540. The controller 510 includes a CPU 512, a DRAM 514, an encoder 516, and a decoder 518. The CPU 512 first de-multiplexes the program in the source storage medium 520 and then stores the temporarily de-multiplexed program in the DRAM 514. The CPU 512 optionally controls the decoder 518 to fully or partially decode the temporary de-multiplexed program. The decoded program is stored in the DRAM 514. The CPU 512 further optionally controls the encoder 516 to re-encode the program in the DRAM 514 and then the CPU 512 re-multiplexes the re-encoded program to the destination storage medium 530. The CPU 512 also generates some program-related information and then stores it in the destination storage medium 530. The source storage medium 420 or 520 and the destination storage medium 430 or 530 can be an optical disk, a magnetic disk, or a magnetic-optical disk.

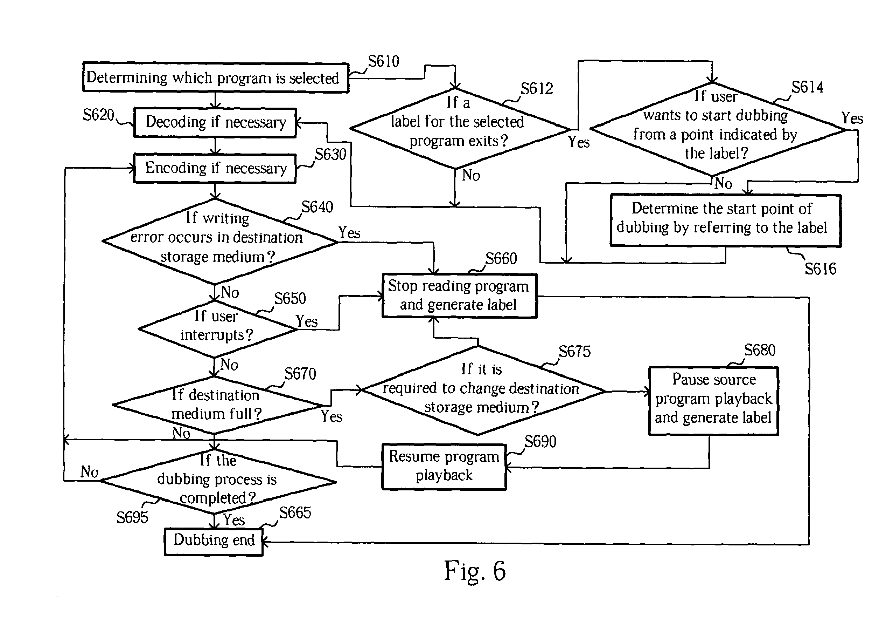

A recovery method of a dubbing system is provided and illustrated in Fig. 6. The recovery method can be applied to both the fast copy dubbing system 400 and the transcode dubbing system 500. Herein the symbol '/' is utilized to mean 'or'. When the controller 410/510 transfers the program from the source storage medium 420 / 520 to the destination storage medium 430 / 530, or more specifically, when the controller 410 / 510 reads the program in the source storage medium 420 / 520, and then stores the program in the destination storage medium 430 / 530, the controller 410 / 510 generates a label for identifying a transferring status of the program. A detailed description of the recovery method is described below.

Initially, the controller 410/510 determines which program in the source storage medium 420 / 520 is selected by a user (S61 0). Next, the controller 410 / 510 checks if the label for the selected program exists (S61 2). If the label for the selected program exists, the controller 410/510 checks if the user wants to start the dubbing process from a point indicated by the label (S614); if not, the controller 410 / 510 will start to transfer the program. If the user wants to start the dubbing process from a point indicated by the label, the controller 410 / 510 determines the start point of the dubbing process by referring to the label (5616); if not, the controller 410/510 will start to transfer the program. The controller 410 skips the decoding and encoding steps (S620 and S630) and directly checks if a writing error occurs in the destination storage medium (S640); on the other hand, the controller 510 decodes and encodes the program (S620 and S630) if necessary, and then also checks if a writing error occurs in the destination storage medium (S640).

When the dubbing process is in progress, the controller 410 / 510 checks if a writing error occurs in the destination storage medium (S640) and checks if the user wants to stop the dubbing process (S650) as well. If a writing error occurs or the user stops the dubbing process, the controller 410 / 510 stops reading the program from the source storage medium 420 / 520, generates a label to identify the transferring status of the program (S660), and then ends the dubbing process (S665). The label can be stored in the source storage medium 420 / 520, the destination storage medium 430 / 530, or the memory 440 / 540. The memory 440 / 540 can be a non-volatile memory, such as an EEPROM or a flash memory. The label can indicate time information, physical information, or logic position information of the program. As mentioned above, the program can be an audio file, a video file, an audio/video file, or a multimedia file. When these kinds of files are utilized during a playback process, a time axis is usually utilized to indicate at what time the file is now playing. When the label indicates the time information of the program, it indicates a time point when the dubbing process is interrupted (e.g. 18 minutes 32 seconds or 2 hours 3 minutes). The physical information of the program indicates the physical position of the source storage medium or the destination storage medium. For example, the physical position can be a certain head of a hard disk. The logic position information indicates the logic position of the program where the program is interrupted. For example, the logic position can indicate the relative position of the interrupted point with respect to the initial point of the program. Moreover, if the source storage medium 420 / 520 is a removable storage medium, the label further comprises information to identify the source storage medium that contains the program. Similarly, if the destination storage medium 430 / 530 is a removable storage medium, the label further comprises information to identify the destination storage medium that contains the program. In this case, the controller 410 510 can identify if the source storage medium 420 / 520 or the destination storage medium 430 / 530 contains the program by directly checking the label.

During the dubbing process, the controller 410 / 510 also checks if the destination storage medium is full (S670). If the destination storage medium is full, the controller 410 / 510 checks if it is required to change the destination storage medium (S675); if not, the controller 410 / 510 checks if the dubbing process is completed (S695). If it is required to change the destination storage medium, the controller 410 / 510 pauses the playback of the program, waits for the user to change the destination storage medium, and generates the label (S680); if not, the controller 410/510 stops reading the program from the source storage medium, generates a label to identify the transferring status of the program (S660), and then ends the dubbing process (S665). After a new destination storage medium is connected, the controller 410 / 510 resumes reading the program from the source storage medium (S690) to continue the dubbing process. Finally, if the program is completely transferred, the controller 410 / 510 stops the dubbing process (S665). In some cases where the destination storage medium 430 / 530 is not a removable storage medium such as a hard disk, the controller 410 / 510 stops the dubbing process when the destination storage medium 430 or 530 is full. In such cases, the dubbing flow goes directly from step S670 to step S660.

As to the transcode dubbing system 500, the controller 510 utilizes the encoder 516 and the decoder 518 to optionally encode and decode the program. The controller 510 can utilize the decoder 518 to directly decode the program in the source storage medium 520 to generate a decoded program, and then store the decoded program in the destination storage medium 530. Alternatively, the controller 510 can utilize the encoder 516 to directly encode the program in the source storage medium 520 to generate an encoded program, and then store the encoded program in the destination storage medium 530. In addition, the controller 510 can utilize the decoder 518 and the encoder 516 together to first decode the program in the source storage medium 520 to generate a decoded program, and then encode the decoded program into an encoded program. The controller 510 further stores the encoded program in the destination storage medium 530. However, please note that the first decoded and then encoded program has either a different coding scheme or coding rate, or both, from that of the original program.

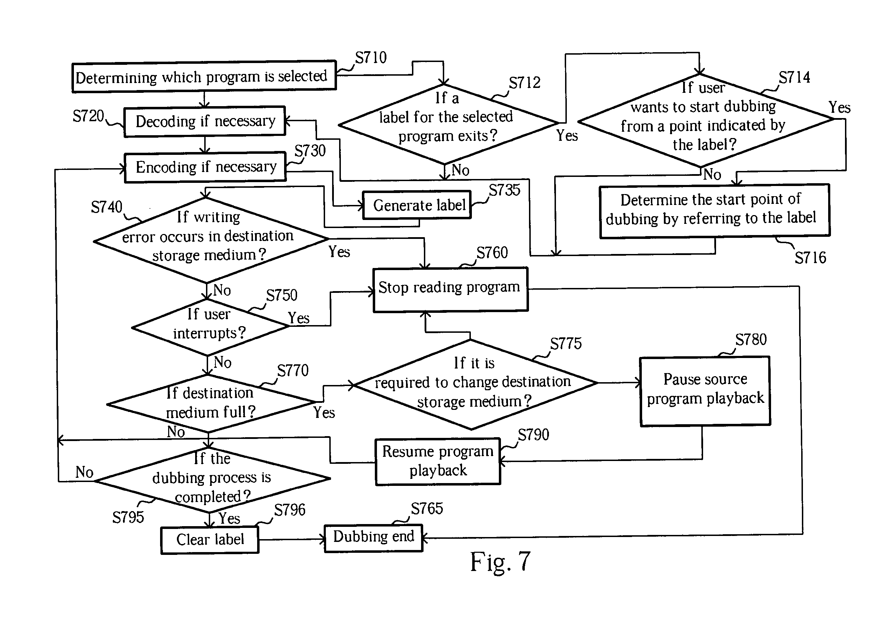

A second recovery method of a dubbing system is provided and illustrated in Fig. 7. Initially, the controller 410 / 510 determines which program in the source storage medium 420 / 520 is selected by a user (S710). Next, the controller 410 / 510 checks if the label for the selected program exists (S712). If the label for the selected program exists, the controller 410 / 510 checks if the user wants to start the dubbing process from a point indicated by the label (S714); if not, the controller 410 / 510 starts to transfer the program. If the user wants to start the dubbing process from a point indicated by the label, the controller 410 / 510 determines the start point of the dubbing process by referring to the label (S716); if not, the controller 410 / 510 starts to transfer the program. The controller 410 skips the decode and encode steps (S720 and S730). Every time before checking if a writing error occurs in the destination storage medium (S740), the controller 410 generates the label to identify the transfer status of the program (S735). More specifically, every predetermined time interval, every predetermined recording length or any interval that determined by any method, a label is generated by the dubbing system. On the other hand, the controller 510 decodes and encodes the program (S720 and S730) if necessary, and then also generates the label to identify the transferring status of the program (S735) before checking if a writing error occurs in the destination storage medium (S740).

When the dubbing process is in progress, the controller 410 / 510 checks if a writing error occurs in the destination storage medium (S740) and checks if the user wants to stop the dubbing process (S750) as well. If a writing error occurs or the user stops the dubbing process, the controller 410 / 510 stops reading the program from the source storage medium 420 / 520 (S760), and then ends the dubbing process (S765).

During the dubbing process, the controller 410 / 510 also checks if the destination storage medium is full (S770). If the destination storage medium is full, the controller 410 / 510 checks if it is required to change the destination storage medium (S775); if not, the controller 410 / 510 checks if the dubbing process is completed (S795). If it is required to change the destination storage medium, the controller 410 / 510 pauses the playback of the program and waits for the user to change the destination storage medium (S780); if not, the controller 410 / 510 stops reading the program from the source storage medium (S760), and then ends the dubbing process (S765). After a new destination storage medium is connected, the controller 410 / 510 resumes reading the program from the source storage medium (S790) to continue the dubbing process. Finally, if the program is completely transferred, the controller 410 / 510 clears the label (S796) and then stops the dubbing process (S765). In some cases where the destination storage medium 430 / 530 is not a removable storage medium such as a hard disk, the controller 410 / 510 stops the dubbing process when the destination storage medium 430 / 530 is full. In such cases, the dubbing flow goes directly from step S770 to step S760.

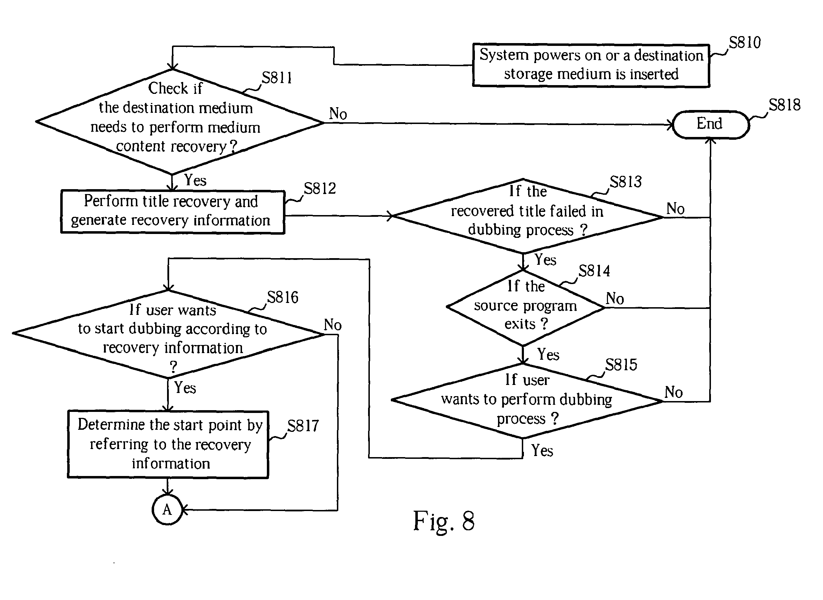

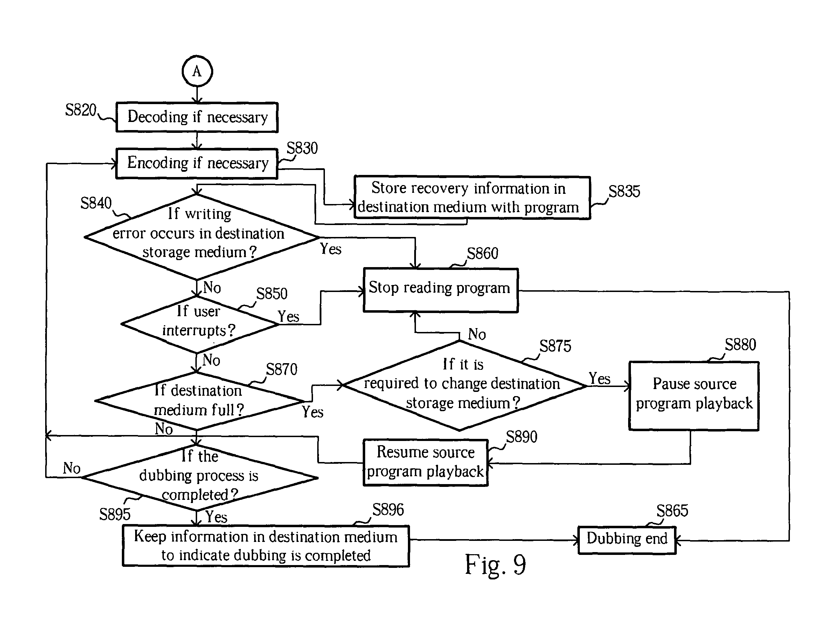

A third recovery method of a dubbing system is provided and illustrated in Fig. 8 and Fig. 9. When the dubbing system 400 or 500 is powered on, or when a destination storage medium is inserted (S810), the controller 410 / 510 checks the destination storage medium and determines if it is required to perform a recovery method, e.g. a title recovery method, to find a recovery information stored in the destination storage medium (S811). If it is not required to perform a recovery method, the dubbing process ends (S818). The title recovery method is a mechanism that can process audio data, video data, or audio/video data in the destination storage medium to find the whole title. The title recovery method is usually utilized to recover one title while a recording process or a dubbing process fails. For example, the title recovery mechanism identifies a specific symbol in the destination storage medium to find the title end and then reconstructs the title integrity. By utilizing the title recovery method, a dubbing system can trace back the point where the dubbing process fails. Because the recovery information of the third recovery method is stored in the destination storage medium, the memory 440 / 540 of the dubbing system 400 / 500 is optional.

If performing a recovery method is necessary, the controller 410 / 510 performs the title recovery method on the destination storage medium 430 / 530 and generates the recovery method (S812). The controller 410 / 510 then checks if the recovered title failed in the previous dubbing process (S813). If the recovered title did not fail in the previous dubbing process, the dubbing process ends (S818), otherwise, the controller 410 / 510 checks if the source program related to the recovered title exists in the source storage medium 420 / 520 (S814). If the source program does not exist, the dubbing process ends (S81 8), otherwise, the controller 410/510 checks if the user wants to perform the dubbing process (S81 5). If the user does not want to perform the dubbing process, the dubbing process ends (S818), otherwise, the controller 410 / 510 checks if the user wants to perform the dubbing process from a start point indicated by the recovery information (S816). If the user does not want to perform the dubbing process from the start point, the controller 510 decodes and encodes the program (S820 and S830) if necessary; however, the controller 410 skips these two steps. If the user wants to perform the dubbing process from a start point, the controller 410 / 510 determines the start point of the dubbing process by referring to the recovery information (S817).

During the dubbing process, the controller 410 / 510 stores not only the program but also the recovery information into the destination storage medium 430 / 530 (S835). The controller 410 / 510 checks if a writing error occurs in the destination storage medium (S840) and checks if the user wants to stop the dubbing process (S850) as well. If a writing error occurs or the user stops the dubbing process, the controller 410 / 510 stops reading the program from the source storage medium 420 /520 (S860), and then ends the dubbing process (S865).

During the dubbing process, the controller 410 / 510 also checks if the destination storage medium is full (S870). If the destination storage medium is full, the controller 410 / 510 checks if it is required to change the destination storage medium (S875); if not, the controller 410 / 510 checks if the dubbing process is completed (S895). If it is required to change the destination storage medium, the controller 410 / 510 pauses the playback of the program and waits for the user to change the destination storage medium (S880); if not, the controller 410 / 510 stops reading the program from the source storage medium (S860), and then ends the dubbing process (S865). After a new destination storage medium is connected, the controller 410 / 510 resumes reading the program from the source storage medium (S890) to continue the dubbing process. Finally, if the program is completely transferred, the controller 410 / 510 stores information in the destination storage medium 430 / 530 to indicate that the dubbing process is completed (S896) and then stops the dubbing process (S865). In some cases where the destination storage medium 430 /530 is not a removable storage medium such as a hard disk, the controller 410 /510 stops the dubbing process when the destination storage medium 430 / 530 is full. In such cases, the dubbing flow goes directly from step S870 to step S860.

Three recovery methods are disclosed in the embodiments to facilitate the dubbing process. The first method generates a label to indicate the dubbing status when the user interrupts due to a writing error or the dubbing process. The second recovery method generates a label to indicate the dubbing status every predetermined time interval, every predetermined data length of recording, or any interval that determined by any method. After the dubbing process is completed, the label is cleared. The third recovery method performs a recovery method to retrieve recovery information stored in the destination storage medium by checking the destination storage medium. By referring to the label or the recovery information, the dubbing process can be resumed from the last stop point where the dubbing process is interrupted instead of from the very beginning of the program.

## Claims

1. A program transferring method comprising:
selecting a program in a first storage medium (420);
transferring the program from the first storage medium (420) to a second storage
medium (430); and
**characterised by**:
generating a label for identifying the transferring status of the program.

2. The method of claim 1, **characterized in that** the step of generating the label comprises:
when the transferring process is interrupted, generating the label.

3. The method of claim 1, **characterized in that** the step of generating the label comprises:
during the transferring process, repeatedly generating the label around a predetermined time interval.

4. The method of claim 1 **characterized by**:
checking if the label corresponding to the program exists; and
determining whether to resume the transferring process from an interrupted status.

5. The method of claim 1 **characterized by**:
checking if the label corresponding to the program exists; and
determining whether to resume the transferring process from an initial status.

6. The method of claim 1, **characterized in that** the step of transferring the program from the first storage medium (520) to a second storage medium (530) comprises:
decoding the program to generate a decoded program;
**characterized in that** the transferring process transfers the decoded program to the second storage medium (530).

7. The method of claim 1, **characterized in that** the step of transferring the program from the first storage medium (520) to a second storage medium (530) comprises:
encoding the program to generate an encoded program;
**characterized in that** the transferring process transfers the encoded program to the second storage medium (530).

8. The method of claim 1, **characterized in that** the step of transferring the program from the first storage medium (520) to a second storage medium (530) comprises:
decoding the program and then encoding to generate an encoded program; **characterized in that** the coding scheme of the encoded program is different from the coding scheme of the program, and the transferring process transfers the encoded program to the second storage medium (530).

9. The method of claim 1, **characterized in that** the step of transferring the program from the first storage medium (520) to a second storage medium (530) comprises:
decoding the program and then encoding to generate an encoded program; **characterized in that** the coding rate of the encoded program is different from the coding rate of the program, and the transferring process transfers the encoded program to the second storage medium (530).

10. The method of claim 1, **characterized in that** the label corresponds to a time information of the program.

11. The method of claim 1, **characterized in that** the label corresponds to a physical information of the program.

12. The method of claim 1, **characterized in that** the label corresponds to a logical position information of the program.

13. The method of claim 1 **characterized by**:
saving the label into the first storage medium (520), the second storage medium (530), or an extra storage medium other than the first storage medium (520) and the second storage medium (530).

14. The method of claim 13, **characterized in that** the extra storage medium is a non-volatile memory.

15. The method of claim 1, **characterized in that** the first storage medium is an optical disk.

16. The method of claim 1, **characterized in that** the first storage medium is a magnetic disk.

17. The method of claim 1, **characterized in that** the first storage medium is a magnetic-optical disk.

18. The method of claim 1, **characterized in that** the second storage medium is an optical disk or a magnetic disk.

19. The method of claim 1, **characterized in that** the second storage medium is a magnetic disk.

20. The method of claim 1, **characterized in that** the second storage medium is a magnetic-optical disk.

21. The method of claim 1, **characterized in that** if the first storage medium (520) is a removable storage medium, the label further comprises information for identifying the first storage medium (520) that contains the program; and if the second storage medium (530) is a removable storage medium, the label further comprises information for identifying the second storage medium (530) that contains the program.

22. A program transferring method **characterized by**:
retrieving a recovery information from a program, the recovery information being used for resuming a transferring process; and
transferring the program from a first storage medium (520) to a second storage medium (530) according to the recovery information.

23. The method of claim 22 **characterized in that** the step of transferring the program from the first storage medium (520) to the second storage medium (530) comprises:
determining whether to resume the transferring process from an interrupted status.

24. The method of claim 22 **characterized in that** the step of transferring the program from the first storage medium (520) to a second storage medium (530) comprises:
determining whether to resume the transferring process from an initial status.

25. An apparatus for transferring a program, comprising:
a first storage medium (520) for storing a program;
a second storage medium (530); and
**characterized by**:
a controller (510), coupled to the first storage medium (520) and the second storage medium (530), for transferring the program from the first storage medium (520) to the second storage medium (530) and generating a label for identifying the transferring status of the program.

26. The apparatus of claim 25, **characterized in that** when the transferring process is interrupted, the controller (510) generates the label.

27. The apparatus of claim 25, **characterized in that** during the transferring process, the controller (510) repeatedly generates the label around a predetermined time interval or a predetermined data length of recording.

28. The apparatus of claim 25, **characterized in that** the controller (510) further checks if the label corresponding to the program exists and determines whether to resume the transferring process from an interrupted status.

29. The apparatus of claim 25, **characterized in that** the controller (510) further checks if the label corresponding to the program exists and determines whether to resume the transferring process from an initial status.

30. The apparatus of claim 25, **characterized in that** the controller (510) further decodes the program to generate a decoded program, and transfers the decoded program to the second storage medium (530).

31. The apparatus of claim 25, **characterized in that** the controller (510) further encodes the program to generate an encoded program, and transfers the encoded program to the second storage medium (530).

32. The apparatus of claim 25, **characterized in that** the controller (510) further decodes and then encodes the program to generate an encoded program, and transfers the encoded program to the second storage medium (530), wherein the coding scheme of the encoded program is different from the coding scheme of the program.

33. The apparatus of claim 25, **characterized in that** the controller (510) further decodes and then encodes the program to generate an encoded program, and transfers the encoded program to the second storage medium (530), wherein the coding rate of the encoded program is different from the coding rate of the program.

34. The apparatus of claim 25, **characterized in that** the label corresponds to a time information of the program.

35. The apparatus of claim 25, **characterized in that** the label corresponds to a physical information of the program.

36. The apparatus of claim 25, **characterized in that** the label corresponds to a logical position information of the program.

37. The apparatus of claim 25, **characterized in that** the apparatus further comprises an extra storage medium that is coupled to the controller (510), and the controller (510) further saves the label into the first storage medium (520), the second storage medium (530) or the extra storage medium.

38. The apparatus of claim 25, **characterized in that** if the first storage medium (520) is a removable storage medium, the label further comprises information for identifying the first storage medium (520) that contains the program; and if the second storage medium (530) is a removable storage medium, the label further comprises information for identifying the second storage medium (530) that contains the program.

39. An apparatus for transferring a program, comprising:
a first storage medium (520) for storing a program;
a second storage medium (530); and
**characterized by**:
a controller (510), coupled to the first storage medium (520) and the second storage medium (530), for retrieving a recovery information from the program and transferring the program from the first storage medium (520) to the second storage medium (530) according to the recovery information, wherein the recovery information is used for resuming a transferring process.

40. The apparatus of claim 39, **characterized in that** the controller (510) further determines whether to resume the transferring process from an interrupted status.

41. The apparatus of claim 39, **characterized in that** the controller (510) further determines whether to resume the transferring process from an initial status.
